# EUROPÄISCHE PATENTSCHRIFT

(11) **EP 2 871 393 B1**
(45) Veröffentlichungstag und Bekanntmachung des Hinweises auf die Patenterteilung: **04.10.2017**
(21) Anmeldenummer: 14190044.9
(22) Anmeldetag: 23.10.2014
(51) Int. Cl.: F23L 3/00

(54) **Rückströmsicherung**
Return flow prevention
Dispositif de sécurité anti-retour

(30) Priorität: 07.11.2013 AT 507412013
(43) Veröffentlichungstag der Anmeldung: 13.05.2015
(73) Patentinhaber: Vaillant GmbH, 42859 Remscheid (DE); Gealan Formteile GmbH, 95145 Oberkotzau (DE)
(72) Erfinder: Engel, Mira, 42929 Wermelskirchen (DE); Tomczak, Heinz-Jörg, 42327 Wuppertal (DE); Thum, Lars, 40724 Hilden (DE); Saunus, Christian, 08223 Grünbach (DE); Pöhlmann, Thomas, 95233 Helmbrechts (DE); Vogel, Stefan, 95100 Selb (DE)
(74) Vertreter: Hocker, Thomas

(56) Entgegenhaltungen:
- EP-A1- 1 035 376
- EP-A1- 2 500 103
- EP-A2- 0 874 182
- WO-A1-2010/091474
- DE-A1- 19 706 734
- DE-A1- 19 845 746
- DE-U1- 29 619 121

## Beschreibung

Die Erfindung betrifft ein Heizungsgerät mit einem Rückströmsicherungsventil.

Gemäß dem Stand der Technik besteht bei Mehrfachbelegung von Heizungsgeräten an einem Abgassystem stets das Problem, dass Abgase eines Gerätes in einem anderen an das Abgassystem angeschlossenen Gerät austreten können. Diese Gefahr besteht vorwiegend dann, wenn ein Heizungsgerät abgeschaltet ist und somit keinen Gegendruck aufbaut. Hierzu gibt es Rückströmsicherungsventile, welche eine Durchströmung des abgeschalteten Heizgeräts verhindern.

Aus DE 19706734 A1 ist eine Ventil zur Entlüftung von Kraftfahrzeuginnenräumen bekannt. Eine Klappe ist an einem Ventilkörper angespritzt und verhindert das Durchströmen von außen ins Fahrzeuginnere. Ähnliche Ventile sind aus EP 874182 A2 sowie DE 19845746 A1 bekannt.

WO 2010/091474 A1 offenbart ein Rückströmventil mit einer Feder zum Verschließen des Ventils.

EP 2500103 A1 zeigt eine Handbrause mit Umschaltvorrichtung, welche im Zweikomponentenspritzgußvefahren hergestellt ist und eine zuverlässige Abdichtung ermöglicht. Aus der EP1035376 A1 ist eine Rückstromklappe zur Verwendung in einer Gas-Brennwerttherme bekannt. Die Rückstromklappe ist zwischen einem Gasgebläse und einem Brenner angeordnet.

Aus der DE 296 19 121 U1 ist eine Sperreinrichtung bekannt, die einen Betrieb von gebläsegestützten Heizgeräten auch bei mehrfach belegten Kaminen ermöglicht. Aufgabe der vorliegenden Erfindung ist es, ein Heizungsgerät mit einem Rückströmsicherungsventil zu schaffen, welches eine einfache Montage ermöglicht und ein sicheres Abdichten gewährleistet.

Erfindungsgemäß wird obige Aufgabe durch die Merkmale des Anspruchs 1 dadurch gelöst, dass bei einem Rückströmsicherungsventil mit einem Ventilgehäuse und einem eine Öffnung des Ventilgehäuses verschließenden Schließkörper der Schließkörper und / oder das Ventilgehäuse über ein Hartplastikteil mit im Zweikomponentenspritzgußverfahren angespritzter elastischer Weichdichtung verfügt. Ein derartig einfacher Aufbau mit lediglich zwei Bauteilen garantiert eine unverlierbare und positionssichere Dichtfläche sowie damit einhergehende Gewährleistung der Dichtheit. Eine radiale Umschließung des Ventilgehäuses mittels einer elastischen Weichdichtung gewährleistet einen dichten Einbau in die Umgebung.

Durch die Montage eines derartigen Rückströmsicherungsventils in einem Heizungsgerät mit einem brennstoffbetriebenen Brenner und einem Gebläse in einer Verbrennungsluftzuführung zwischen Brenner und Gebläse kann bei Mehrfachbelegung einer Abgasanlage mit mehreren Heizungsgeräten eine Abgasströmung von einem Heizungsgerät durch ein anders Heizungsgerät verhindert werden. Das Rückströmsicherungsventil sollte dabei derart montiert sein, dass das Ventilgehäuse mit seiner Außenkontur formschlüssig mit der Innenkontur der Verbrennungsluftzuführung verbunden ist, um Dichtheit zu gewährleisten. Der Schließkörper sollte sich auf der dem Gebläse abgewandten Seite des Ventilgehäuses befindet, damit das von dem Gebläse geförderte Gas das Rückströmsicherungsventil beim Betrieb des Heizungsgeräts aufdrücken kann.

Weitere vorteilhafte Ausgestaltungen ergeben sich aus den Unteransprüchen.

Ist um die Öffnung des Ventilgehäuses eine Dichtfläche angeordnet, so kann eine elastische Weichdichtung des Schließkörpers darauf abdichten. Ist am Rande der Öffnung des Ventilgehäuses eine Weichdichtung angeordnet, so kann der Schließkörper über diese Dichtung abdichten. Die Weichdichtung kann in Form von Gummi (EPDM), thermoplastisches Elastomer oder Schaum (z.B. PUR) realisiert werden. Die Weichdichtung ermöglicht ferner ein leises Schließen des Ventils.

Ist der Schließkörper mit dem Ventilgehäuse über ein Scharnier verbunden, wobei eines der beiden Bauteile über mindestens eine Scharnierbuchse und das andere Bauteil über mindestens einen Scharnierstift verfügt, so kann der Schließkörper einfach geführt bewegt werden. Verfügt der Schließkörper über ein Zusatzgewicht, so kann die Dichtkraft erhöht werden. Der gleiche Effekt kann über eine Feder, welche den Schließkörper gegen das Ventilgehäuse drückt, erreicht werden.

Die Erfindung wird anhand der Figuren detailliert erläutert.

Die Zeichnungen zeigen:
Fig. 1 ein erfindungsgemäßes Rückströmsicherungsventil,
Fig. 2 dasselbe erfindungsgemäße Rückströmsicherungsventil aus einer anderen Perspektive,
Fig. 3 den Ventilsitz des Rückströmsicherungsventils aus den Figuren 1 und 2,
Fig. 4 den Schließkörper des Rückströmsicherungsventils aus den Figuren 1 und 2 sowie
Fig. 5 eine Baugruppe eines Heizungsgeräts mit einem erfindungsgemäßen Rückströmsicherungsventil.

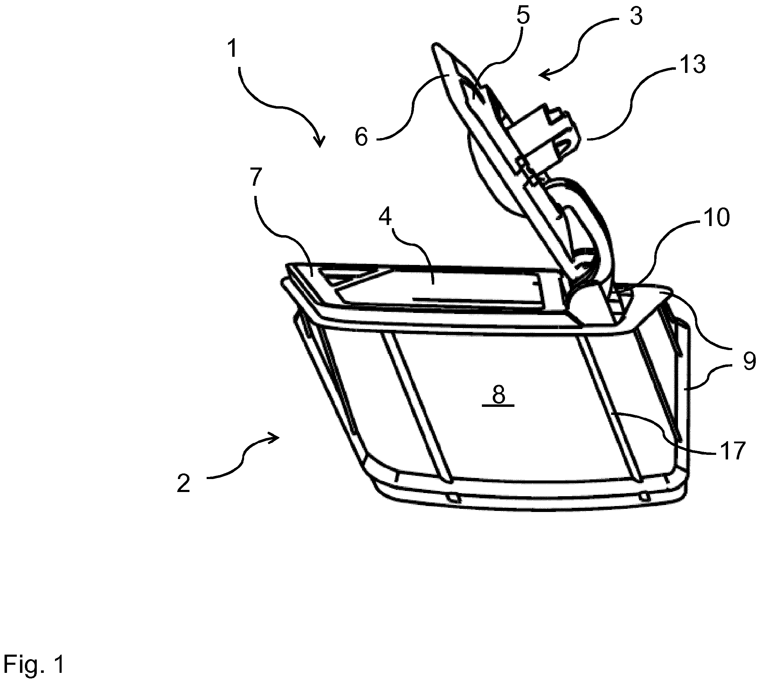

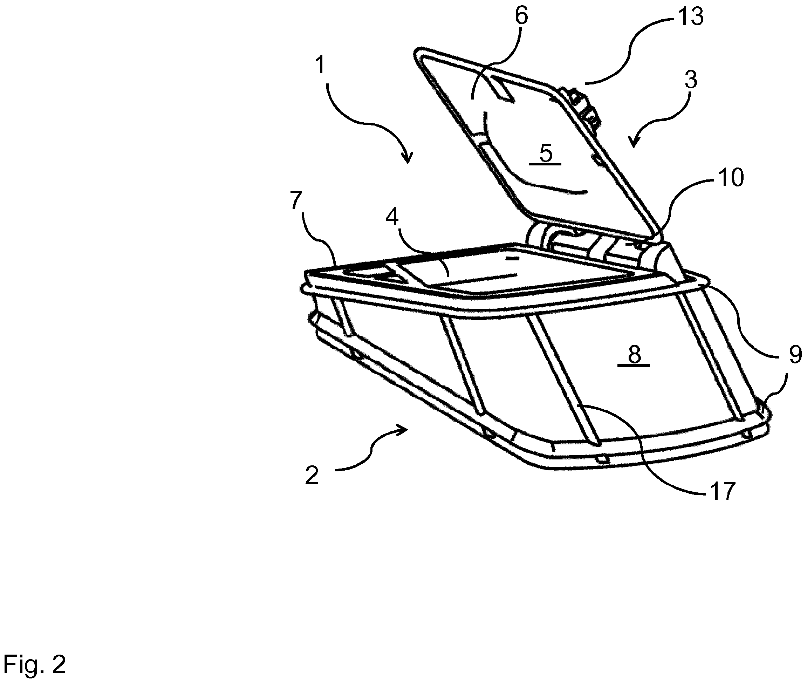

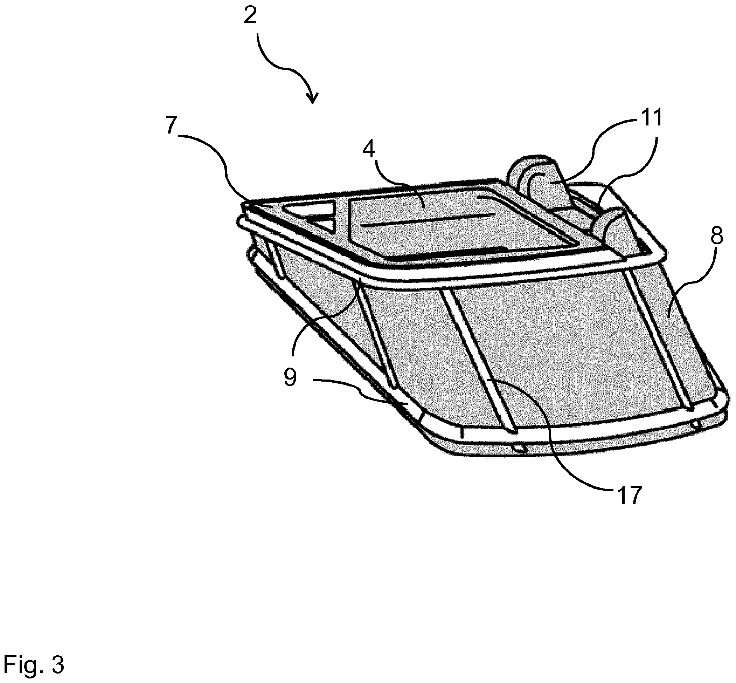

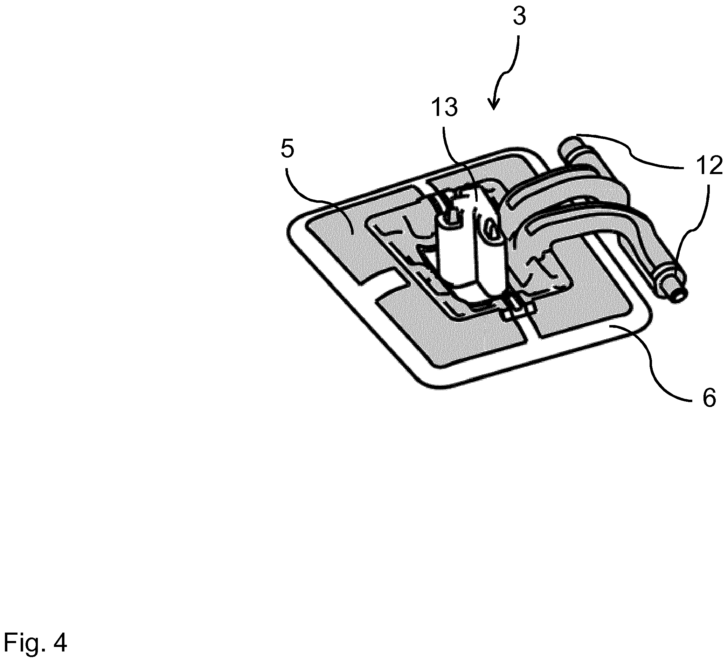

Figur 1 und 2 zeigen ein Rückströmsicherungsventil 1 mit einem Ventilgehäuse 2 und einem Schließkörper 3 in geöffnetem Zustand. Wie auch aus Figur 3 hervorgeht, verfügt das Ventilgehäuse 2 über eine Öffnung 4. Um diese Öffnung 4 des Ventilgehäuses 2 ist eine Dichtfläche 7 angeordnet. Der Schließkörper 3, der detailliert in Figur 4 dargestellt ist, verfügt über ein erstes Hartplastikteil 5, an das im Zweikomponentenspritzgußverfahren eine erste elastische Weichdichtung 6 angespritzt ist. Das Ventilgehäuse 2 verfügt über ein zweites Hartplastikteil 8, an das im Zweikomponentenspritzgußverfahren eine zweite elastische Weichdichtung 9 angespritzt ist. In Figur 3 sowie 4 sind die Hartplastikteile 5, 8 zur besseren Unterscheidung grau und die elastischen Weichdichtungen 6, 9 weiß dargestellt. Bei der ersten elastischen Weichdichtung 6 des Schließkörpers handelt es ich um eine Flachdichtung mit Lippenkontur.

Die Dichtfläche 7 um die Öffnung 4 des Ventilgehäuses 2 kann mittels der ersten elastischen Weichdichtung 6 des Schließkörpers 3 abgedichtet werden, wobei die Dichtfläche 7 als Ventilsitz agiert. Hierzu ist der Schließkörper 3 mit dem Ventilgehäuse 2 über ein Scharnier 10 verbunden, wobei das Ventilgehäuse 2 über Scharnierbuchsen 11 und der Schließkörper 3 über Scharnierstifte 12 verfügen. Der Schließkörper 3 ist ferner mit einem Zusatzgewicht 13 verbunden. Eine zweite elastische Weichdichtung 9 umgibt das Bauteil des Ventilgehäuses 2 radial. Die zweite elastische Weichdichtung 9 verfügt über elastische Dichtungsrippen 17, mit denen auch der Toleranzausgleich zwischen dem Ventilgehäuse 2 und seinem Einbauort durch die Verpressung der Dichtung realisiert werden kann.

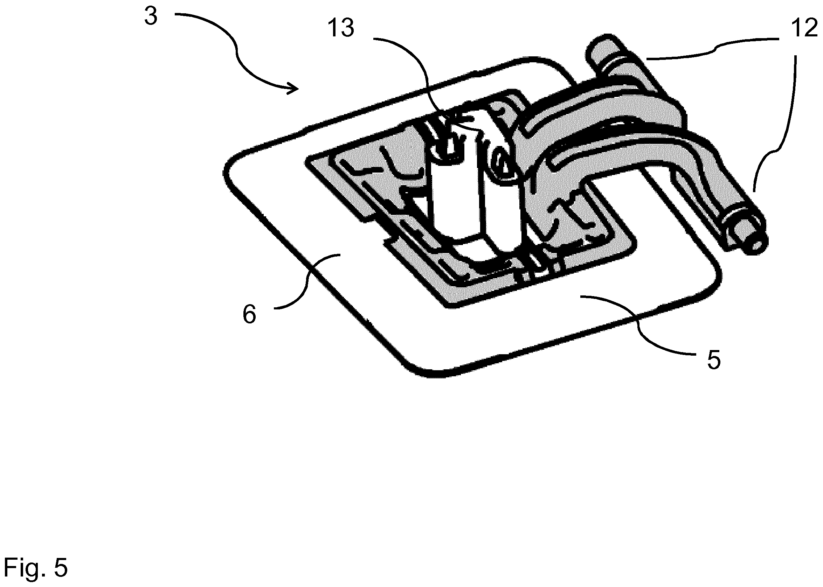

Figur 5 zeigt eine leichte Abwandlung, welche im Vergleich zu Figur 4 verdeutlicht, dass die elastischen Weichdichtung 6 die größte Fläche des Schließkörper 3 einnimmt und das erste Hartplastikteil 5 vorwiegend zur Sicherstellung der Kinematik und der Aufnahme des Zusatzgewichts 13 benötigt wird.

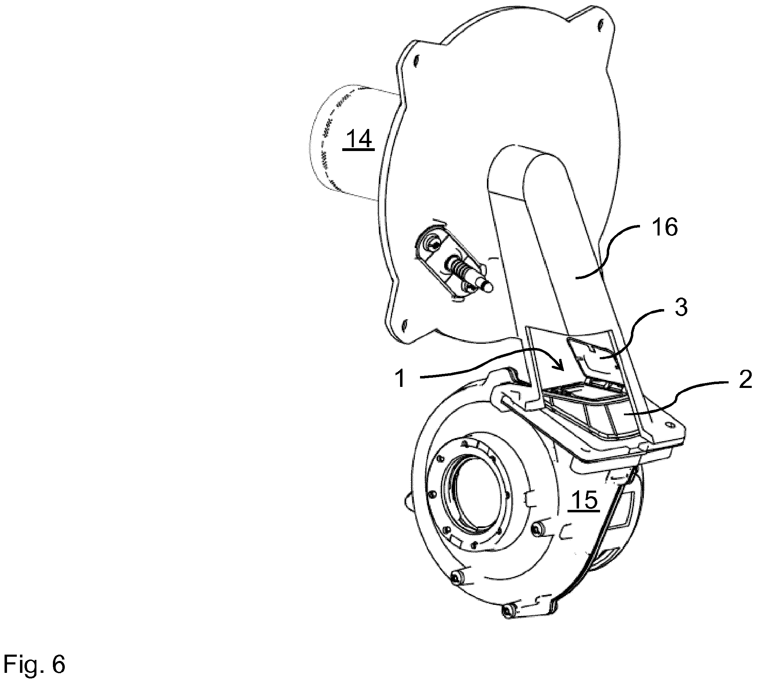

Figur 6 zeigt einen Teil eines Heizungsgerätes mit einem brennstoffbetriebenen Brenner 14 und einem Gebläse 15 zur Versorgung des Brenners 14 mit Verbrennungsluft. In einer Verbrennungsluftzuführung 16 zwischen dem Brenner 14 und dem Gebläse 15 ist ein erfindungsgemäßes Rückströmsicherungsventil 1 montiert; Figur 5 zeigt hierzu einen Schnitt in der Verbrennungsluftzuführung 16. Hierbei ist das Ventilgehäuse 2 über seine Außenkontur formschlüssig mit der Innenkontur der Verbrennungsluftzuführung 16 verbunden und mittels der zweiten elastischen Weichdichtung 9 abgedichtet. Das Rückströmsicherungsventil 1 ist derart in der Verbrennungsluftzuführung 16 angeordnet, dass sich der Schließkörper 3 auf der dem Gebläse 15 abgewandten Seite des Ventilgehäuses 2 befindet.

Beim Betrieb des Brenners 14 fördert das Gebläse 15 Verbrennungsluft - sowie gegebenenfalls Brenngas - durch die Verbrennungsluftzuführung 16 zum Brenner 14 und durchströmt dabei das Rückströmsicherungsventil 1. Durch den Druck des Gases wird das Rückströmsicherungsventil 1 geöffnet, wobei sich der Schließkörper 3 um das Scharnier 10 nach oben dreht. Ist der Brenner 14 außer Betrieb, so wird auch das Gebläse 15 außer Betrieb genommen. Durch die Schwerkraft dreht sich der Schließkörper 3 wieder um das Scharnier 10, so dass die erste elastische Weichdichtung 6 auf der Dichtfläche 7 um die Öffnung 4 des Ventilgehäuses 2 zum Liegen kommt und das Rückströmsicherungsventil 1 verschließt. Das Zusatzgewicht 13 erhöht dabei den Anpressruck. Dieses Zusatzgewicht 13 kann in Form von Softkomponentenmaterial auf Befestigungstegen aus Hartplastik auf dem Schließkörper 3 befestigt werden und kann gleichzeitig als Anschlag beziehungsweise Öffnungsbegrenzung (mit Dämpfung) für den Schließkörper 3 gegen die innere Kontur der Verbrennungsluftzuführung 16 dienen.

Kommen nun bei Mehrfachbelegung Abgase eines anderen Heizgerätes durch die Abgasleitung und den Brenner 14 zum Rückströmsicherungsventil 1 in der Verbrennungsluftzuführung 16, so können sie nicht weiter durch das geschlossene Rückströmsicherungsventil 1 strömen. Ein Abgasaustritt in den Aufstellungsraum des Heizgerätes ist somit ausgeschlossen.

Eine Montage kann leicht erfolgen, indem vor der Montage des Gebläses 15 das Rückströmsicherungsventil 1 in die Verbrennungsluftzuführung 16 geschoben wird. Eine leicht konische Form des Rückströmsicherungsventils 1 und der korrespondieren Passage der Verbrennungsluftzuführung 16 gewährleisten einen definierten Einbauort, der nach der Montage des Gebläses 15 durch dieses gegen Verschieben gesichert ist.

Wird das Heizungsgerät zu einem späteren Zeitpunkt an einer eigenen Abgasanlage betrieben, so kann das Rückströmsicherungsventil 1 wieder einfach demontiert werden, um den Strömungswiderstand zu reduzieren.

Alternativ zum oben beschriebenen Ausführungsbeispiel kann erfindungsgemäß ein Teil der zweiten elastischen Weichdichtung 9 des Ventilgehäuses 2 am Rande einer runden Öffnung 4 des Ventilgehäuses 2 angeordnet sein und mittels eines Schließkörpers 3 zum Beispiel in Form einer Kugel abgedichtet werden.

Um den Anpressdruck des Schließkörpers 3 auf das Ventilgehäuse 2 zu erhöhen, kann alternativ oder ergänzend zum Zusatzgewicht 13 der Schließkörper 3 mit dem Ventilgehäuse 2 über eine nicht dargestellte Feder verbunden sein.

Der Schließkörper 3 kann über Versteifungsrippen verfügen, um eine Verformung durch thermische und alterungsbedingte Einflüsse zu vermeiden.

Eine Abdichtung des Ventilgehäuses 2 in der Verbrennungsluftzuführung 16 kann auch durch Klebstoff erfolgen, wobei sich insbesondere Zweikomponentenkleber eignet. Verfügt das Ventilgehäuse 2 über Nuten am Umfang, so kann zumindest eine Komponente des Klebers in diese Nuten gespritzt werden.

## Patentansprüche

1. Heizungsgerät mit einem brennstoffbetriebenen Brenner (14) und einem Gebläse (15) zur Versorgung des Brenners (14) mit Verbrennungsluft, bei dem in einer Verbrennungsluftzuführung (16) zwischen Brenner (14) und Gebläse (15) ein Rückströmsicherungsventil (1) mit einem Ventilgehäuse (2) und einem Schließkörper (3), wobei das Ventilgehäuse (2) über eine Öffnung (4) verfügt, welche von dem Schließkörper (3) verschließbar ist, der Schließkörper (3) über ein erstes Hartplastikteil (5) verfügt, an das im Zweikomponentenspritzgußverfahren eine erste elastische Weichdichtung (6) angespritzt ist und / oder das Ventilgehäuse (2) über ein zweites Hartplastikteil (8) verfügt, an das im Zweikomponentenspritzgußverfahren eine zweite elastische Weichdichtung (9) angespritzt ist, derart montiert ist, dass das Ventilgehäuse (2) mit seiner Außenkontur formschlüssig mit der Innenkontur der Verbrennungsluftzuführung (16) verbunden ist und der Schließkörper (3) sich auf der dem Gebläse (15) abgewandten Seite des Ventilgehäuses (2) befindet, **dadurch gekennzeichnet, dass** das Rückströmsicherungsventil (1) eine konische Form aufweist und die Verbrennungsluftzuführung (16) über eine korrespondiere, konische Passage verfügt und zumindest Teile der zweiten elastischen Weichdichtung (9) das Bauteil des Ventilgehäuses (2) radial umgeben.

2. Heizungsgerät-nach Anspruch 1, **dadurch gekennzeichnet, dass** um die Öffnung (4) des Ventilgehäuses (2) eine Dichtfläche (7) angeordnet ist, welche über die erste elastische Weichdichtung (6) des Schließkörpers (3) abgedichtet werden kann.

3. Heizungsgerät-nach Anspruch 1, **dadurch gekennzeichnet, dass** zumindest Teile der zweiten elastischen Weichdichtung (9) des Ventilgehäuses (2) am Rande der Öffnung (4) des Ventilgehäuses (2) angeordnet sind und die Öffnung (4) somit mittels des Schließkörpers (3) abgedichtet werden kann.

4. Heizungsgerät-nach einem der Ansprüche 1 bis 3, **dadurch gekennzeichnet, dass** der Schließkörper (3) mit dem Ventilgehäuse (2) über ein Scharnier (10) verbunden ist, wobei eines der beiden Bauteile (2, 3) über mindestens eine Scharnierbuchse (11) und das andere Bauteil (2, 3) über mindestens einen Scharnierstift (12) verfügt.

5. Heizungsgerät-nach einem der Ansprüche 1 bis 4, **dadurch gekennzeichnet, dass** mit dem Schließkörper (3) ein Zusatzgewicht (13) verbunden ist.

6. Heizungsgerät-nach einem der Ansprüche 1 bis 5, **dadurch gekennzeichnet, dass** der Schließkörper (3) mit dem Ventilgehäuse (2) über eine Feder verbunden ist.

## Claims

1. Heating device with a fuel-powered burner (14) and a blower (15) to supply the burner (14) with combustion air in which a check valve (1) having a valve housing (2) and a closure body (3) is mounted in a combustion air duct (16) between burner (14) and blower (15), wherein the valve housing (2) has an opening (4), which can be sealed by the closure body (3), the closure body (3) has a first hard plastic part (5) on which a first elastic soft seal (6) is injected in the two-component injection moulding process and/or the valve housing (2) has a second hard plastic part (8) on which a second elastic soft seal (9) is injected in the two-component injection moulding process in such a way that the valve housing (2) is connected with its outer contour in a materially-bonded manner to the inner contour of the combustion air duct (16) and the closure body (3) is located on the side of the valve housing (2) facing away from the blower (15), **characterised in that** the check valve (1) has a conical form and the combustion air duct (16) has a corresponding, conical passage and at least parts of the second elastic soft seal (9) radially surround the component of the valve housing (2).

2. Heating device according to claim 1, **characterised in that** a seal surface (7) is arranged around the opening (4) of the valve housing (2) which can be sealed via the first elastic soft seal (6) of the closure body (3).

3. Heating device according to claim 1, **characterised in that** at least parts of the second elastic soft seal (9) of the valve housing (2) are arranged at the edge of the opening (4) of the valve housing (2) and the opening (4) can thus be sealed by means of the closure body (3).

4. Heating device according to any one of claims 1 to 3, **characterised in that** the closure body (3) is connected to the valve housing (2) via a hinge (10) wherein one of the two components (2, 3) has at least one hinge bushing (11) and the other component (2, 3) has at least one hinge pin (12).

5. Heating device according to any one of claims 1 to 4, **characterised in that** an additional weight (13) is connected to the closure body (3).

6. Heating device according to any one of claims 1 to 5, **characterised in that** the closure body (3) is connected to the valve housing (2) via a spring.

## Revendications

1. Appareil de chauffage avec un brûleur (14) à combustible et avec un ventilateur (15) pour alimenter le brûleur (14) en air de combustion, dans lequel une soupape de sécurité anti-retour (1) avec un corps de soupape (2) et avec un corps d'obturation (3) est montée dans une conduite d'amenée d'air de combustion (16) entre le brûleur (14) et le ventilateur (15), le corps de soupape (2) disposant d'une ouverture (4) qui peut être fermée par le corps d'obturation (3), le corps d'obturation (3) disposant d'une première partie en plastique dur (5) au niveau de laquelle une premier joint d'étanchéité mou (6) élastique est injecté au cours d'un procédé de moulage par injection à deux composantes et/ou le corps de soupape (2) disposant d'une deuxième partie en plastique dur (8) au niveau de laquelle une deuxième joint d'étanchéité mou (9) élastique est injecté au cours d'un procédé de moulage par injection à deux composantes, de telle sorte que le corps de soupape (2) avec son contour extérieur est assemblé par concordance de forme avec le contour intérieur de l'amenée d'air de combustion (16) et le corps d'obturation (3) se trouve du côté du corps de soupape (2) qui est éloigné du ventilateur (15), **caractérisé en ce que** la soupape de sécurité anti-retour (1) présente une forme conique et l'amenée d'air de combustion (16) dispose d'un passage conique correspondant et au moins des parties du deuxième joint d'étanchéité mou (9) élastique entourent radialement le module du corps de soupape (2).

2. Appareil de chauffage selon la revendication 1, **caractérisé en ce qu'**une surface d'étanchéité (7), qui peut être rendue étanche par l'intermédiaire du premier joint d'étanchéité mou (6) élastique du corps d'obturation (3), est agencée autour de l'ouverture (4) du corps de soupape (2).

3. Appareil de chauffage selon la revendication 1, **caractérisé en ce qu'**au moins des parties du deuxième joint d'étanchéité mou (9) élastique du corps de soupape (2) sont agencées au niveau du bord de l'ouverture (4) du corps de soupape (2) et l'ouverture (4) peut ainsi être rendue étanche au moyen du corps d'obturation (3).

4. Appareil de chauffage selon l'une des revendications 1 à 3, **caractérisé en ce que** le corps d'obturation (3) est assemblé au corps de soupape (2) par l'intermédiaire d'une charnière (10), l'un des deux modules (2, 3) disposant d'au moins un manchon de charnière (11) et l'autre module (2, 3) disposant d'au moins une broche de charnière (12).

5. Appareil de chauffage selon l'une des revendications 1 à 4, **caractérisé en ce qu'**une masse additionnelle (13) est assemblée au corps d'obturation (3).

6. Appareil de chauffage selon l'une des revendications 1 à 5, **caractérisé en ce que** le corps d'obturation (3) est assemblé au corps de soupape (2) par l'intermédiaire d'un ressort.
